# EUROPÄISCHE PATENTSCHRIFT

(11) **EP 2 340 288 B1**
(45) Veröffentlichungstag und Bekanntmachung des Hinweises auf die Patenterteilung: **12.12.2012**
(21) Anmeldenummer: 09784007.8
(22) Anmeldetag: 14.10.2009
(51) Int. Cl.: C09J 7/02, D03D 15/00, C09J 7/04, B32B 27/12

(54) **TEXTILER TRÄGER, KLEBEBAND DAMIT UND KABELBAUM DAMIT**
TEXTILE SUBSTRATE, ADHESIVE STRIP THEREWITH AND WIRE HARNESS THEREWITH
SUPPORT TEXTILE, RUBAN ADHÉSIF ET HARNAIS DE CÂBLES ASSOCIÉS

(30) Priorität: 21.10.2008 EP 08167189; 09.01.2009 DE 102009004512
(43) Veröffentlichungstag der Anmeldung: 06.07.2011
(73) Patentinhaber: TESA SE, 20253 Hamburg (DE)
(72) Erfinder: WAHLERS-SCHMIDLIN, Andreas, 21720 Guderhandviertel (DE); KOPF, Patrik, 22417 Hamburg (DE); SUTTER, Ulrike, 77743 Neuried (DE)
(86) Internationale Anmeldenummer: PCT/EP2009/063407
(87) Internationale Veröffentlichungsnummer: WO 2010/046290

(56) Entgegenhaltungen:
- EP-A- 0 052 363
- EP-A- 1 074 594
- EP-A- 1 074 595
- WO-A-01/83632
- US-A- 3 853 598

## Beschreibung

Die Erfindung betrifft einen textilen Träger - geeignet für ein Klebeband - mit einem textilen Flächengebilde und einer nicht klebrigen Polymerschicht, die am textilen Flächengebilde haftet und ein Polymer aufweist. Die Erfindung betrifft ferner ein Klebeband mit diesem textilen Träger sowie einen Kabelbaum mit diesem Klebeband mit diesem textilen Träger.

Mit "Klebeband" - ganz korrekt müsste es eigentlich "Selbstklebeband" heißen, aber das ist wohl wegen zu großer Länge sprachlich unüblich - ist ein flaches längliches Gebilde gemeint, das auf zumindest einer Seite eine permanente Klebrigkeit aufweist, sodass auf dieser Seite eine Verklebung **herbeigeführt** werden kann ohne erst die Klebrigkeit herbeiführen zu müssen, etwa durch Zugabe eines Lösungsmittels.

Ein derartiger textiler Träger ist aus der EP 1 074 594 A2 bekannt. Dort dient die nicht klebrige Polymerschicht dazu, das Klebeband wasserdicht zu machen. In Absatz [0009] behauptet diese Schrift, dass diese wasserdichte Schicht dabei "helfe", den Träger so zu binden, dass er leichter zu zerreißen sei. Dem ist zu entnehmen, dass diese wassedichte Polymerschicht alleine für die Herstellung der Handeinreißbarkeit nicht ausreicht, sondern nur eine Ergänzung zu der übergeordneten Maßnahme darstellt, nämlich die zur Handeinreißbarkeit führende Trägerbindung durch eine hinreichend steife Selbstklebemasse zu erzielen.

Darüberhinaus scheint die erzielte Wasserdichtigkeit nur einen Vorteil während der Herstellung des Klebebandes zu erzielen - insbesondere, wenn eine Selbstklebemasse als Dispersion aufgetragen werden soll, weil diese dann nicht zu der dem Auftragsorgan gegenüberliegenden Seite durch das Gewebe laufen kann - , während am fertigen Produkt, insbesondere bei abrupten und heftigen Erhitzungen im Trockenen, diese Dichtigkeit die Feuchtigkeitsabgabe an die Umgebung nachteiligerweise zu behindern scheint.

Aus der FR 2 797 268 A1 sowie aus der EP 1 074 595 B1**,** die aus der französischen Prioritätsanmeldung hervorgegangen ist, ist ein mit der Hand zerreißbares Klebeband auf Basis eines Polyestergewebes bekannt, bei dem die Fasern des Polyestergewebes durch eine Klebstoffschicht relativ zueinander fixiert werden, so dass sich beim Zerreißen mit der Hand die Kraft auf wenig Fasern konzentriert.

Wenn der "Klebstoff", aus dem die besagte "Klebstoffschicht" gemacht werden soll, eine Selbstklebemasse ist, dann muss zur Erzielung der erstrebten Handeinreißbarkeit diese Selbstklebemasse eine ausgesprochen hohe Steifigkeit und eine hohe Kohäsion aufweisen. Zumindest innerhalb der wirtschaftlich und technisch besonders bevorzugten Klasse von Selbstklebemassen, nämlich den Acrylat-Kompositionen, scheint es keine Type zu geben, die diese Steifigkeits- und Kohäsionsforderung ohne Abstriche bei anderen Eigenschaften - insbesondere der Klebrigkeit und Fließfähigkeit - erfüllt.

In einem zweiten Aspekt betrifft die Erfindung ein Klebeband für die Kabelbaumherstellung. Es ist bekannt, dass in zahlreichen Maschinen elektrische Verbraucher mit elektrischen Stromquellen über Kabel verbunden sind, die zumindest abschnittsweise zu einem mehr oder wenig verzweigten Kabelbaum zusammengefasst sind. Das geschieht beispielsweise dadurch, dass zusammenzufassende Bündel von Kabeln mit einem geeigneten Klebeband umwickelt werden. Nachteilig an bekannten Bandagierungen für Kabelbäume ist, dass sie bei erhöhten Temperaturen von beispielsweise 150°C und unter Biegebelastung schnell versagen. Das aber ist unerwünscht, weil auch bei einem Überhitzungsstörfall der Kabelbaum aus Sicherheitsgründen eine vorgegebene Zeit funktionstüchtig bleiben muss.

Der Erfindung liegt die Aufgabe zugrunde, einen textilen Träger für ein Klebeband anzugeben, der eine Handeinreißbarkeit des Klebebands erlaubt ohne die Auswahl der Selbstklebemasse einzuschränken.

Die Erfindung löst das Problem durch einen gattungsgemäßen textilen Träger gemäß Anspruch 1, bei dem das Polymer eine Glasübergangstemperatur zwischen - 20°C und +60°C besitzt und ein statischer Elastizitätsmodul und eine Schichtdicke der Polymerschicht so gewählt sind, dass eine Weiterreißkraft in Querrichtung des textilen Trägers nach DIN EN ISO 13937-2 höchstens 10 N beträgt.

Vorteilhaft an der Erfindung ist, dass dieser textile Träger von Hand reißbar ist und gleichzeitig jede beliebige Selbstklebeschicht aus Selbstklebemasse tragen kann, auch Acrylatklebemasse.

Besonders vorteilhaft ist, dass ein erfindungsgemäßes Klebeband eine vorteilhafte Langzeitstabilität hat. Klebebänder werden zur Simulation der Langzeitstabilität Temperaturtests unterzogen. Meist wird dabei ein Modellkabelsatz mit einem Klebeband umwickelt. Der Kabelsatz wird bei erhöhter Temperatur entsprechend der spezifizierten Temperaturklasse gelagert und anschließend auf Raumtemperatur abgekühlt. Danach wird der Kabelsatz um einen Dorn mit definiertem Durchmesser gebogen und beurteilt. Die Prüfung ist bestanden, wenn der Kabelsatz noch intakt bleibt, insbesondere dürfen sich keine Abplatzungen, Längsrisse oder Querrisse in dem Klebeband bilden. Dieser Test wird beispielsweise in der Spezifikation STE 9645871091, IND D, Kapitel 5.6.5.1, Methode 2 der Firma PSA Peugeot Citroën beschrieben.

Klebebänder, die lediglich aus nicht beschichtetem Polyestergewebe und Klebemasse bestehen, können in der Regel den Test nur bis zur Temperaturklasse T3 (Lagerbedingungen 150 °C für 240 Stunden) bestehen, nicht aber in der Temperaturklasse T4 (Lagerbedingung 175°C für 240 Stunden).

Der Erfindung liegt die Erkenntnis zugrunde, dass zur Erreichung der Handeinreißbarkeit des textilen Trägers für ein Klebeband weder eine wasserdichte Schicht auf dem Träger noch eine bestimmte Selbstklebemasse auf dem Träger entscheidend ist, sondern vielmehr eine hinreichend feste und steife Fesselung der in Klebeband-Längsrichtung verlaufenden Fäden aneinander. Das wird dadurch erreicht, dass der Elastizitätsmodul und die Schichtdicke der Polymerschicht so gewählt werden, dass eben diese Fesselung eintritt.

Bei Verwendung der bis heute vorherrschenden, aber zur Verwirklichung der Erfindung nicht zwingend notwendigen Gewebe als Trägermaterial kommt es auf die steife, feste und rutschfreie Anbindung von Kettfäden und Schussfäden an jeder Fadenkreuzstelle an. Zu diesem Zweck ist eine ausgehärtete Masse besser geeignet als eine dauerhaft klebrige Masse, wie sie in der bereits erwähnten EP 1 074 595 B1 verwendet wird.

Im Rahmen der vorliegenden Beschreibung wird unter einem textilen Flächengebilde ein Gewebe, wobei zumindest die Kettfäden aus Polyester bestehen, verstanden.

Unter der Glasübergangstemperatur wird insbesondere die Temperatur verstanden, die durch Differenzkalorimetrie, DSC (Differential Scanning Calorimetry, DSC) ermittelt wird.

Der Erfindung basiert auf der Erkenntnis, dass bei einer Ausgestaltung gemäß EP 1 074 595 einerseits eine hohe Steifigkeit und Kohäsivität der

Selbstklebemasse entscheidend sind für die Erzielung der gewünschten Handeinreißbarkeit, andererseits aber diese beiden vorgenannten Forderungen damit kollidieren, dass die Selbstklebemasse auch eine ausreichende Fließfähigkeit aufweisen sollte, nicht nur, um eine hohe Klebrigkeit zu erreichen, sondern auch, um bei Biegeversuchen mit einem erfindungsgemäßen Kabelbaum mit einer Umwicklung durch ein erfindungsgemäßes Klebeband mit einem erfindungsgemäßen Träger Biegespannungen dadurch mindern zu können, dass die Überlappungen benachbarter Wickellagen in gewissem Umfange aufeinander abgleiten können.

Ferner haben die Erfinder erkannt, dass die Forderung nach hoher Steifigkeit der Selbstklebemasse zur Erzielung der Handeinreißbarkeit mit der Forderung nach leichter Biegbarkeit des Klebebandes kollidiert, besonders wenn die Selbstklebemasse dick aufgetragen wird.

Um diesen Kollisionen und dem dadurch bedingten Zwang zu einem mehr oder weniger faulen Kompromiss zu entgehen, haben sich die Erfinder entschlossen, die Funktion der Fixierung der Fäden aneinander von der anderen Funktion der Selbstklebebereitschaft zu trennen und die erste Funktion einer ausgehärteten - also bei Verarbeitungstemperatur nicht klebrigen - Polymermasse anzuvertrauen, die kreuzende Fäden aneinander fesselt, während die zweite Funktion einer Selbstklebemasse übertragen wird, die dank der Befreiung von der kollisionsträchtigen Forderung nach hoher Steifigkeit nun allein auf die klebetechnischen und viskosen Eigenschaften hin optimiert werden kann und insbesondere auch aus der gewerblich besonders vorteilhaften Klasse der Acrylat-Selbstklebemassen ausgewählt werden kann.

Der Erfindung liegt weiterhin die Erkenntnis zugrunde, dass ein hoher Wasserdampfdiffusionswiderstand der Beschichtung und/oder Tränkung des textilen Flächengebildes für die Erzielung der Handeinreißbarkeit nicht nur nicht erforderlich ist, sondern für die Erzielung guter Ergebnisse im T4-Temperaturbereich sogar nachteilig ist.

Für die erfindungsgemäß auf und/oder in das textile Flächengebilde eingearbeitete Polymermasse ist die eingestellte Glasübergangstemperatur wichtig; denn die Glasübergangstemperatur darf einerseits nicht zu tief liegen, weil dann die zur Erzielung der Handeinreißbarkeit nötige steife Fadenfesselung an den Faden-Kreuzungsstellen nicht mehr erreicht wird. Andererseits haben zu hohe Glasübergangstemperaturen zur Folge, dass die Beschichtung das textile Flächengebilde auch schon bei geringen Auftragsgewichten von beispielsweise 10 g/m² derart verspröden, dass die Biegsamkeit des Trägers, die für ein Klebeband wichtig ist, nicht mehr gegeben ist.

Das Polymer ist "in" das textile Flächengebilde eingearbeitet, zum Beispiel durch Tränkung - sei es in einem Hotmelt, einer Lösung oder einer Dispersion - , und/oder "auf" das textile Flächengebilde aufgebracht - zum Beispiel durch einseitiges Aufsprühen oder Aufstreichen - wobei die am meisten bevorzugte Ausführungsform ein Zwischending zwischen "in" und "auf" ist, nämlich ein so weit das Gewebe durchdringender Aufstrich, dass im Verein mit der hohen Benetzungsfreudigkeit der Polymermasse während des Auftrages die Fadenkreuzungen vollständig, wenn auch nur hauchdünn, umschlungen werden, ansonsten aber mit der bloßen Hand und dem unbewehrten Auge das Polymer auf der dem Aufstrich abgewandten Seite nicht wahrnehmbar ist.

Eine Tränkung mit dem Polymer ergibt eine besonders innige Verbindung zwischen dem textilen Flächengebilde und der Polymerschicht, was die Handeinreißbarkeit besonders zuverlässig und schon bei relativ geringer Auftragsmenge pro Quadratmeter herbeiführt.

Eine Beschichtung derart, dass auf einer der beiden Seiten des textilen Flächengebildes mehr Polymermasse ist als auf der anderen, muss zwar eine weniger innige Verbindung hinnehmen, die aber gleichwohl ausreichend sein kann, solange die Asymmetrie des Trägerquerschnittes nicht zu groß wird. Der Vorteil einer gewissen Asymmetrie, jedenfalls dann, wenn die polymerreichere Seite der Selbstklebemasse zugewandt ist, liegt darin, dass die Gegenfläche an einer Windung n, auf der die Selbstklebemasse einer Windung n+1 beim Kabelbaumwickeln zu liegen kommt, weitgehend ihre gewohnten Eigenschaften behält, sodass keine Umgewöhnung bei den Kunden herbeigeführt werden muss, die den Verkauf erschweren könnte.

Um eine solche Asymmetrie, also eine Bedeckung vorwiegend von einer Seite zu erreichen, werden die Dispersionen in der Regel angedickt zu Pasten und eine so genannte Pastenbeschichtung durchgeführt. Nach einer Trocknung, wobei auch Vernetzungsreaktionen stattfinden können, erhält man das beschichtete Gewebe.

Die Eigenschaften des beschichteten textilen Flächengebildes, vorzugsweise Gewebes, wie beispielsweise Steifigkeit, Griff, Optik, Oberflächenbeschaffenheit, Abrissfestigkeit oder Einreißbarkeit, sind zum einen von der Art des textilen Flächengebildes und der Auftragsmenge abhängig, zum weiteren aber auch durch die viskoelatischen Eigenschaften der Polymerschicht bestimmt.

Gemäß einer bevorzugten Ausführungsform beträgt ein Quotient aus einer Höchstzugkraft nach DIN EN ISO 13934-1 des textilen Flächengebildes in Längsrichtung und der Reißfestigkeit der Polymerschicht gemessen nach DIN EN ISO 527-1/-2/-3 zwischen 40 und 65 N/(MPa·cm). Es hat sich herausgestellt, dass dann, wenn dieses Merkmal erfüllt ist, für alle gängigen textilen Flächengebilde und Polymerschichten eine Handreißbarkeit erreicht wird.

Bei einem textilen Flächengebilde mit einer großen Höchstzugkraft, das heißt in anderen Worten aus Fasern großer Reißfestigkeit, muss auch die Reißfestigkeit der Polymerschicht hoch sein, damit der Quotient im angegebenen Intervall liegt. In diesem Fall widersteht der Polymerfilm einer Reißbelastung besonders gut und gibt wenig nach, wenn mit den Fingern eine Reißkraft auf den textilen Träger aufgebracht wird. In diesem Fall konzentriert sich die Kraft der Finger auf sehr wenige Fasern, beispielsweise eine oder zwei, die dann durchgerissen werden können. Auf gleiche Weise pflanzt sich der Riss fort, bis der textile Träger oder das Klebeband durchgerissen sind.

Bei einem textilen Flächengebilde geringer Reißfestigkeit reicht hingegen bereits eine geringere Reißfestigkeit der Polymerschicht aus, denn die Fesselung braucht nicht länger zu halten als die Fäden selber.

Der Zusammenhang von relevanten Textileigenschaften - insbesondere innerhalb der für diesen Zweck bis heute üblichen Polyesterfasern - und Eigenschaften der Polymerschicht kann also über den Quotienten aus der Höchstzugkraft des Gewebes und der Reißfestigkeit des Polymerfilms befriedigend dargestellt werden.

Beispielsweise sind Polyestergewebe aus Filamentgarnen mit Höchstzugkräften in Kettrichtung von 70 bis 100 N/cm normalerweise nicht quer einreißbar. Der Grund dafür ist, dass sich die Längsfäden über die Querfäden verschieben, es deshalb zu einer Kraftverteilung über viele Fäden gleichzeitig kommt und der Widerstand des Gewebes zu hoch ist, um eine Einreißbarkeit von Hand in Querrichtung zu erreichen. Ein Maß dafür ist die Weiterreißkraft, die nach DIN EN ISO 13937-2 gemessen werden kann. Bei Werten über 10 N gelten ein Klebeband oder ein Gewebeträger als nicht einreißbar, darunter als einreißbar.

Gemäß einer bevorzugten Ausführungsform beträgt die Reißfestigkeit der Polymerschicht mehr als 1,0 MPa, insbesondere mehr als 1,3 MPa. Dadurch wird erreicht, dass auch textile Flächengebilde mit einer großen Höchstzugkraft per Hand einreißbar sind.

Die Schichtdicke der Polymerschicht liegt zwischen 10 g/m² und 30 g/m², insbesondere zwischen 15 g/m² und 25 g/m². Es hat sich gezeigt, dass derartige Schichtdicken einerseits gut aufbringbar sind und andererseits ausreichend sind, um die Einreißbarkeit von Hand zu gewährleisten.

Besonders einfach und besonders effizient ist der textile Träger, wenn das Flächengebilde ein Gewebe ist, das Kettfäden aufweist, die in einer Klebeband-Längsrichtung verlaufen. In diesem Fall kann der textile Träger in Querrichtung, das heißt in Richtung der Schussfäden zerrissen werden.

Die Kettfäden bestehen aus Polyester. Günstig ist es zudem, wenn auch die Schussfäden aus Polyester bestehen. Dieses Material ist besonders günstig herstellbar und leicht zu verarbeiten.

Die Höchstzugkraft des Gewebes in Längsrichtung ist größer als 70 N/cm. Eine derartige Höchstkraft war bei textilen Trägern bislang nicht zusammen mit der Handeinreißbarkeit erreichbar.

Bevorzugt liegt eine Oberflächenspannung des textilen Flächengebildes über 40 Nm/m. Für das Polymer wird ebenfalls eine Oberflächenspannung über 40 Nm/m bevorzugt. Die Moleküle des textilen Flächengebildes und die Polymermoleküle sollten eine ähnlich große Polarität aufweisen. Mit diesen Maßgaben wird eine besonders starke Kopplung zwischen Textil und Polymer erreicht. Beim gewünschten Zerreißen, z. B. mit dem Fingernagel, behindert dies wiederum besonders wirksam die Lastaufteilung auf eine Vielzahl von Fäden. Infolgedessen konzentriert sich die Kraft beim Einreißen mit der Hand auf besonders wenige Fäden. Hieraus wiederum resultiert, dass auch textile Flächengebilde mit einer hohen Höchstzugkraft in Längsrichtung per Hand zerrissen werden können.

Besonders vorteilhaft ist es, wenn der Polymerfilm im Wesentlichen Acrylat enthält, da in diesem Fall der textile Träger besonders günstig hergestellt werden kann. Vorzugsweise wird er als angedickte wässerige Dispersion aufgebracht und sollte zu diesem Zwecke in geringer Konzentration ein Detergens enthalten.

Insoweit der Träger - wie im Stande der Technik vorherrschend - auf einem solchen textilen Flächengebilde aufbaut, das als "Gewebe" angesprochen wird, weist dieses textile Flächengebilde per Definition Kettfäden in der Längsrichtung und Schussfäden in der Querrichtung auf. Als Schussfäden kommen vorzugsweise solche Fäden in solcher Häufung vor, dass das Produkt aus dem Fadengewicht in dtex und und der Fadenhäufung pro cm Gewebelänge größer als 4.000 dtex/cm ist, besonders bevorzugt zwischen 4.300 und 5.000 dtex/cm. Als Kettfäden kommen vorzugsweise solche Fäden in solcher Häufung vor, dass das Produkt aus dem Fadengewicht in dtex und und der Fadenhäufung pro cm Gewebebreite größer als 2.300 dtex/cm ist, besonders bevorzugt zwischen 2.600 und 3.200 dtex/cm.

Derartige textile Träger können zu besonders hochwertigen Klebebändern verarbeitet werden.

Die Erfindung bezieht sich zudem auf ein Klebeband mit einem erfindungsgemäßen textilen Träger und einer auf der Polymerschicht aufgebrachten und an der Polymerschicht haftenden Selbstklebeschicht aus Selbstklebemasse. Es kann sich auch bei dieser Selbstklebemasse um eine Acrylatklebemasse handeln, die aber andere Eigenschaften hat als der Polymerfilm. Insbesondere wird diese Selbstklebemasse so gewählt, dass eine Glasübergangstemperatur unterhalb von - 20°C liegt. Erfindungsgemäß ist zudem ein Kabelbaum mit einer Bandagierung, die ein derartiges Klebeband umfasst. Erfindungsgemäß ist außerdem die Verwendung eines erfindungsgemäßen Klebebands zur Herstellung von Kabelbäumen.

Um bei einem vorgegebenen textilen Flächengebilde einen erfindungsgemäßen textilen Träger herzustellen, wird das textile Flächengebilde in einer Versuchsreihe mit nicht klebrigen Polymerschichten mit einer Glasübergangstemperatur zwischen -20° und +60°C getränkt, wobei sukzessive der statische Elastizitätsmodul und die Schichtdicke gesteigert werden, so dass sich eine Steifigkeit der Polymerschicht erhöht. Es wird dann jeweils die Weiterreißkraft bestimmt, bis die angegebenen 10 N unterschritten werden.

### Ausführungsbeispiel:

Ein Polyestergewebe aus Filamentgarn mit 33 Fäden in Kettrichtung mit einem Garngewicht von 84 dtex und 28 Fäden in Schussrichtung mit einem Garngewicht von 167 dtex besitzt eine Höchstzugkraft von etwa 85 N/cm. Es ist mit der Hand nicht quer reißbar.

Das Gewebe wird dann beschichtet mit einer Acrylatdispersion (Acronal® 500 D von der BASF SE). Dieser Polymerfilm besitzt nach seiner Austrocknung eine Glasübergangstemperatur (gemessen mittels Differenzkalorimetrie, DSC) von -13°C. Die Schichtstärke beträgt 20g/m², bezogen auf die Trockenmasse. Nach dem Trocknen ist das so beschichtete Gewebe quer mit der Hand einreißbar. Auf die Polymerschicht wird dann eine Klebmasse beschichtet. Danach - egal ob vor oder nach dem Aufwickeln - werden aus diesem sehr breiten Mutterklebeband die einzelnen Klebebänder in der gewünschten Breite geschnitten, üblicherweise zur Kabelbandagierung zwischen 9 und 50 mm.

Unabhängig von der verwendeten Klebmasse bleibt das Band handeinreißbar. Es besteht zudem den Temperaturtest T4.

Aus der Höchstzugkraft des Gewebes (85 N/cm) und der Reißfestigkeit der Dispersion, gemessen nach DIN EN ISO 527-1 und 527-2 von 1,5 MPa ergibt sich ein Quotient von 56,5 N/(MPa·cm). - Ein nicht mit der Hand reißbares Klebeband würde hingegen erhalten, wenn das gleiche Polyestergewebe nur mit einer Acrylatselbstklebemasse aus der Schmelze (acResin® A 260 UV der BASF SE), Auftragsgewicht 80g/m², beschichtet und anschließend mittels UV-Licht vernetzt würde. Überdies bestünde das so beschichtete Gewebe nicht den obigen Temperaturtest T4. Die Acrylatschicht besitzt eine Glasübergangstemperatur von -34°C und eine Reißfestigkeit von 0,5 MPa. Aus der Höchstzugkraft des Gewebes (85 N/cm) und der Reißfestigkeit des Beschichtungsfilms von 0,5 MPa ergibt sich ein Quotient von 170 N/(MPa·cm).

Aus diesem zuletzt diskutierten und nicht funktionierenden, nicht zur Erfindung gehörenden Beispiel schließen die Erfinder, dass die Abkehr davon, das Gewebe durch den Auftrag einer Selbstklebemasse zur Handeinreißbarkeit bringen zu wollen, und die Zuwendung dazu, auf das Gewebe eine nicht-klebrige und steife Schicht und/oder Tränkung aufzubringen, zu einem großen Fortschritt führt, weil so auch weniger scherfeste Selbstklebemassen zugelassen werden können.

## Patentansprüche

1. Textiler Träger - geeignet für ein Klebeband - mit
(a) einem textilen Flächengebilde,
(b) wobei das textile Flächengebilde ein Gewebe ist, das Kettfäden aufweist, die in eine Klebebandlängsrichtung verlaufen,
(c) wobei zumindest die Kettfäden aus Polyester bestehen,
(d) wobei die Höchstzugkraft des Gewebes in Längsrichtung größer ist als 70 N/cm, und
(e) einer nicht klebrigen Polymerschicht, die am textilen Flächengebilde haftet und ein Polymer aufweist,
**dadurch gekennzeichnet, dass**
(f) das Polymer eine Glasübergangstemperatur bestimmt durch DSC zwischen -20°C und +60°C besitzt,
(g) die Schichtdicke der Polymerschicht zwischen 10 g / m² und 30 g / m² liegt ,
(h) ein statischer Elastizitätsmodul (E) und eine Schichtdicke (d) der Polymerschicht so gewählt sind, dass eine Weiterreißkraft in Querrichtung des textilen Trägers nach DIN EN ISO 13937-2 höchstens 10 N beträgt,
(i) Quotient aus einer Höchstzugkraft nach DIN EN ISO 13934-1 des textilen Flächengebildes in Längsrichtung und der Reißfestigkeit der Polymerschicht gemessen nach DIN EN ISO 527-1/-2/-3 40 bis 65 N/(MPa·cm) beträgt,
(j) wobei die Fadenkreuzungen im textilen Flächengebilde vollständig von der Polymerschicht umschlungen sind.

2. Textiler Träger nach Anspruch 1, **dadurch gekennzeichnet, dass** die Reißfestigkeit der Polymerschicht größer ist als 1,0 MPa, insbesondere größer als 1,3 MPa.

3. Textiler Träger nach einem der vorstehenden Ansprüche, **dadurch gekennzeichnet, dass** die Schichtdicke der Polymerschicht zwischen 15 g / m² und 25 g / m² liegt.

4. Textiler Träger nach einem der vorstehenden Ansprüche, **dadurch gekennzeichnet, dass**
- eine Oberflächenspannung des textilen Flächengebildes größer 40 Nm/m ist und
- das Polymer eine Oberflächenspannung größer 40 Nm/m hat.

5. Textiler Träger nach einem der vorstehenden Ansprüche, **dadurch gekennzeichnet, dass** der Polymerfilm im Wesentlichen Acrylat enthält.

6. Textiler Träger nach zumindest einem der Ansprüche 1 bis 5, **dadurch gekennzeichnet, dass** das textile Flächengebilde des Trägers ein Gewebe ist, dessen Schussfäden ein Produkt aus Fadengewicht in dtex und Fadenhäufung pro cm Gewebelänge größer als 4.000 dtex/cm liefern.

7. Textiler Träger nach Anspruch 6, **dadurch gekennzeichnet, dass** dessen Schussfäden ein Produkt aus Fadengewicht in dtex und Fadenhäufung pro cm Gewebelänge zwischen 4.300 und 5.000 dtex/cm aufweisen.

8. Textiler Träger nach zumindest einem der Ansprüche 1 bis 5, **dadurch gekennzeichnet, dass** das textile Flächengebilde des Trägers ein Gewebe ist, dessen Kettfäden ein Produkt aus Fadengewicht in dtex und Fadenhäufung pro cm Gewebebreite größer als 2.300 dtex/cm liefern.

9. Textiler Träger nach Anspruch 8, vorzugsweise auch nach 7, **dadurch gekennzeichnet, dass** dessen Kettfäden ein Produkt aus Fadengewicht in dtex und Fadenhäufung pro cm Gewebebreite zwischen 2.600 und 3.200 dtex/cm aufweisen.

10. Klebeband mit
(a) einem textilen Träger nach einem der vorstehenden Ansprüche und
(b) einer auf der Polymerschicht aufgebrachten und an der Polymerschicht haftenden Selbstklebeschicht aus Selbstklebemasse

11. Kabelbaum mit einer Bandagierung, die ein Klebeband nach Anspruch 0 umfasst.

12. Verwendung eines Klebebands nach Anspruch 10 zur Herstellung von Kabelbäumen.

## Claims

1. Textile carrier - suitable for an adhesive tape - comprising
(a) a sheetlike textile structure,
(b) where the sheetlike textile structure is a woven fabric having warp threads which extend in one longitudinal adhesive tape direction,
(c) where at least the warp threads consist of polyester,
(d) where the maximum longitudinal direction tensile force of the fabric is greater than 70 N/cm, and
(e) a non-tacky polymer layer which adheres to the sheetlike textile structure and comprises a polymer,
**characterized in that**
(f) the polymer possesses a glass transition temperature determined by DSC between -20°C and +60°C,
(g) the layer thickness of the polymer layer is between 10 g/m² and 30 g/m²,
(h) static elasticity modulus (E) and layer thickness (d) of the polymer layer are selected such that DIN EN ISO 13937-2 transverse direction tearing force of the textile carrier is not more than 10 N,
(i) ratio of DIN EN ISO 13934-1 longitudinal direction maximum tensile force of the sheetlike textile structure to the tear strength of the polymer layer measured to DIN EN ISO 527-1/-2/-3 is 40 to 65 N/(MPa cm),
(j) where the thread crossover points in the sheetlike textile structure are embraced completely by the polymer layer.

2. Textile carrier according to Claim 1, **characterized in that** the tear strength of the polymer layer is greater than 1.0 MPa, more particularly greater than 1.3 MPa.

3. Textile carrier according to either of the preceding claims, **characterized in that** the layer thickness of the polymer layer is between 15 g/m² and 25 g/m².

4. Textile carrier according to any of the preceding claims, **characterized in that**
- surface tension of the sheetlike textile structure is greater than 40 Nm/m and
- the polymer has a surface tension of greater than 40 Nm/m.

5. Textile carrier according to any of the preceding claims, **characterized in that** the polymer film comprises substantially acrylate.

6. Textile carrier according to at least one of Claims 1 to 5, **characterized in that** the sheetlike textile structure of the carrier is a woven fabric whose weft threads yield a product of thread weight in dtex and thread count per cm woven fabric length of greater than 4000 dtex/cm.

7. Textile carrier according to Claim 6, **characterized in that** its weft threads exhibit a product of thread weight in dtex and thread count per cm woven fabric length of between 4300 and 5000 dtex/cm.

8. Textile carrier according to at least one of Claims 1 to 5, **characterized in that** the sheetlike textile structure of the carrier is a woven fabric whose warp threads yield a product of thread weight in dtex and thread count per cm woven fabric width of greater than 2300 dtex/cm.

9. Textile carrier according to Claim 8, preferably also 7, **characterized in that** its warp threads exhibit a product of thread weight in dtex and thread count per cm woven fabric width of between 2600 and 3200 dtex/cm.

10. Adhesive tape comprising
(a) a textile carrier according to any of the preceding claims and
(b) a self-adhesive layer of self-adhesive composition which is applied to the polymer layer and adheres to the polymer layer.

11. Cable harness with bandaging comprising an adhesive tape according to Claim 10.

12. Use of an adhesive tape according to Claim 10 for producing cable harnesses.

## Revendications

1. Support textile - approprié pour un ruban adhésif - comportant
(a) un article plat textile,
(b) l'article plat textile étant un tissu qui comporte des fils de chaîne qui sont orientés dans le sens de la longueur du ruban adhésif,
(c) au moins les fils de chaîne consistant en polyester,
(d) la force de traction maximale du tissu dans le sens de la longueur étant supérieure à 70 N/cm, et
(e) une couche de polymère non collante, qui comporte un polymère et adhère à l'article plat textile,
**caractérisé en ce que**
(f) le polymère a une température de transition vitreuse, déterminée par DSC, comprise entre -20 °C et +60 °C,
(g) l'épaisseur de couche de la couche de polymère est comprise entre 10 g/m² et 30 g/m²,
(h) un module d'élasticité statique (E) et une épaisseur de couche (d) de la couche de polymère sont choisis de manière qu'une force de propagation de la déchirure dans le sens transversal du support textile selon DIN EN ISO 13937-2 soit au maximum de 10 N,
(i) le quotient d'une force de traction maximale selon DIN EN ISO 13934-1 de l'article plat textile dans le sens de la longueur et de la résistance à la traction de la couche de polymère, mesurée selon DIN EN ISO 527-1/-2/-3 vaille de 40 à 65 N/MPa cm),
(j) les croisements de fils dans l'article plat textile sont totalement enrobés de la couche de polymère.

2. Support textile selon la revendication 1, **caractérisé en ce que** la résistance à la traction de la couche de polymère est supérieure à 1,0 MPa, en particulier supérieure à 1,3 MPa.

3. Support textile selon l'une quelconque des revendications précédentes, **caractérisé en ce que** l'épaisseur de couche de la couche de polymère est comprise entre 15 g/m² et 25 g/m².

4. Support textile selon l'une quelconque des revendications précédentes, **caractérisé**
- **en ce qu'**une tension superficielle de l'article plat textile est supérieure à 40 Nm/m et
- le polymère a une tension superficielle supérieure à 40 Nm/m.

5. Support textile selon l'une quelconque des revendications précédentes, **caractérisé en ce que** le film de polymère contient essentiellement un acrylate.

6. Support textile selon au moins l'une quelconque des revendications 1 à 5, **caractérisé en ce que** l'article plat textile du support est un tissu, dont les fils de trame donnent un produit du poids des fils en dtex et de la somme des fils par cm de longueur du tissu qui est supérieur à 4 000 dtex/cm.

7. Support textile selon la revendication 6, **caractérisé en ce que** ses fils de trame donnent un produit du poids des fils en dtex et de la somme des fils par cm de longueur du tissu qui est compris entre 4 300 et 5 000 dtex/cm.

8. Support textile selon au moins l'une quelconque des revendications 1 à 5, **caractérisé en ce que** l'article plat textile du support est un tissu dont les fils de chaîne donnent un produit du poids des fils en dtex et de la somme des fils par cm de largeur de tissu de plus de 2 300 dtex/cm.

9. Support textile selon la revendication 8, de préférence également selon la revendication 7, **caractérisé en ce que** ses fils de chaîne présentent un produit du poids des fils en dtex et de la somme des fils par cm de largeur de tissu compris entre 2 600 et 3 200 dtex/cm.

10. Ruban adhésif comportant
(a) un support textile selon l'une quelconque des revendications précédentes et
(b) une couche autocollante à base de matière autocollante, appliquée sur la couche de polymère et adhérant à la couche de polymère.

11. Harnais de câbles, comportant un entourage qui comprend un ruban adhésif selon la revendication 10.

12. Utilisation d'un ruban adhésif selon la revendication 10, pour la fabrication de harnais de câbles.
